Europäisches Patentamt

European Patent Office

Office européen des brevets

(11) Publication number: **0 414 336 A2**

# EUROPEAN PATENT APPLICATION

(21) Application number: **90303105.2**

(51) Int. Cl.⁵: **B01D 29/13**

(22) Date of filing: **22.03.90**

(30) Priority: **24.08.89 US 398056**

(43) Date of publication of application:
**27.02.91 Bulletin 91/09**

(84) Designated Contracting States:
**DE DK FR GB IT NL SE**

(71) Applicant: **ALBANY INTERNATIONAL CORP.**
**1373 Broadway**
**Albany New York 12204(US)**

(72) Inventor: **Scarano, Robert V.**
**18 Queensway, Glens Falls**
**New York 12801(US)**

(74) Representative: **Bardo, Julian Eason et al**
**Abel & Imray Northumberland House 303-306**
**High Holborn**
**London, WC1V 7LH(GB)**

(54) **A filtering media with support structure.**

(57) A tubular or cylindrical filter structure 10 consists of a plurality of ring-shaped elements 12 disposed in stacked relation by connecting rods 18 and supporting a filtering media 20. The filtering media 20 is disposed inside or outside the ring-shaped elements, depending on the direction of fluid flow therethrough. The ring-shaped elements protect the filtering media 20 from tensile or compressive forces generated by the fluid flow, and at the same time present an open structure.

FIG.2

# A FILTERING MEDIA WITH SUPPORT STRUCTURE

This invention pertains to a filter used for removing particulate matter from a fluid under high pressure, and more particularly to a filter structure having a tubular configuration.

In many industrial processes, a cylindrical filter is required for separating particulate matter from a fluid, said fluid flowing in a radial direction either inwardly or outwardly with respect to a filtering media. Prior art cylindrical filters used for radially outward flow usually included a cylindrical plate formed with a plurality of perforations and a filtering media disposed within the cylinder in the flow path of the fluid. However this type of structure was found to be unsatisfactory for a number of reasons. For example, the perforations had to be spaced sufficiently to insure that the filter structure could withstand the radial forces and consequential hoop stress applied thereto by the high pressure fluid during filtration. However, as a result of this spacing, a large filter was required to be able to handle a given fluid flow. Perforating the plate meant that at least 50% of the plate materials were discarded. Furthermore, at least 50-60% of the filtering media was blocked. A more open structure could be made only by providing a very thick plate for withstanding the above-mentioned radial forces. Hence the cylindrical filters used in the industry up till now were inefficient and expensive.

A problem with which the present invention is concerned is the provision of a tubular filter with an open structure to take full advantage of the surface area of a filtering media.

A filter structure in accordance with the present invention has the advantage that it is capable of having small overall dimensions.

Another advantage is that the filter medium can be provided with very small interstices for capturing minute particulate matter.

The present invention provides a filter structure for removing particulate matter from a fluid flowing along a path, the structure comprising:
a hollow tubular support structure comprising a plurality of axially spaced circumferentially extending elongate support parts, and spacing means coupled to the support parts for maintaining the parts in preselected axially spaced positions; and
a filtering media supported by the support structure and extending over the spaces between the support parts.

A cylindrical support structure is preferred but the tubular support structure is not limited to being of a constant cross-section and may vary in size or in shape, for example, by being of tapered configuration.

The provision of circumferentially extending elongate support parts at the circumference of the tubular structure allows the support structure to withstand the radial forces generated during filtering by the pressure of the fluid. Preferably, the width measured radially of each portion of a support part is substantially greater than the depth measured axially of that portion, so that each portion extends radially outwards from the enclosed, tubular space, which design further improves the resistance of the support structure to the radial forces; ideally, each support part is substantially flat, i.e. of relatively shallow depth. Furthermore, the axial spacing of the elongate support parts allows the structure to be open so as to increase the surface area of filtering media that is exposed to the fluid flow therethrough.

In one preferred embodiment, each support part is a discrete ring shaped element.

In a second preferred embodiment, the support parts are integrally connected so as to form a helical coil.

Preferably, the spacing means comprises a plurality of substantially axially extending rods, the rods being circumferentially spaced around the support parts. The rods may be disposed radially inwards, or, radially outwards, of the support parts, depending on the direction of flow of the fluid; alternatively, the rods may extend through the support parts, the support structure further comprising spacers disposed between the support parts and securing means for securing together the spacers, rods and support parts.

The filtering media may consist of a woven material or a flat sheet having a plurality of minute openings, and it may be disposed radially inwards or radially outwards of the support structure, again, depending on the fluid's direction of flow; usually, it will be disposed on the opposite side of the support structure to the spacing means.

A number of embodiments of the present invention will now be described, by way of example only, with reference to the accompanying drawings, in which:

Figure 1 is a plan view of a filter structure constructed in accordance with this invention;

Figure 2 is a longitudinal sectional view of the filter structure of Figure 1;

Figure 3 is a plan view of a second type of filter structure constructed in accordance with this invention;

Figure 4 is a longitudinal sectional view of the filter structure of Figure 3;

Figure 5 is an enlarged plan view of a preferred embodiment of the filter media for the filter structures of Figure 1-4;

Figure 6 is an enlarged longitudinal sectional view of the filtering media of Figure 5;

Figure 7 is a modification of the filter structure of Figure 1; and

Figure 8 is a plan view of a third type of filter constructed in accordance with the invention.

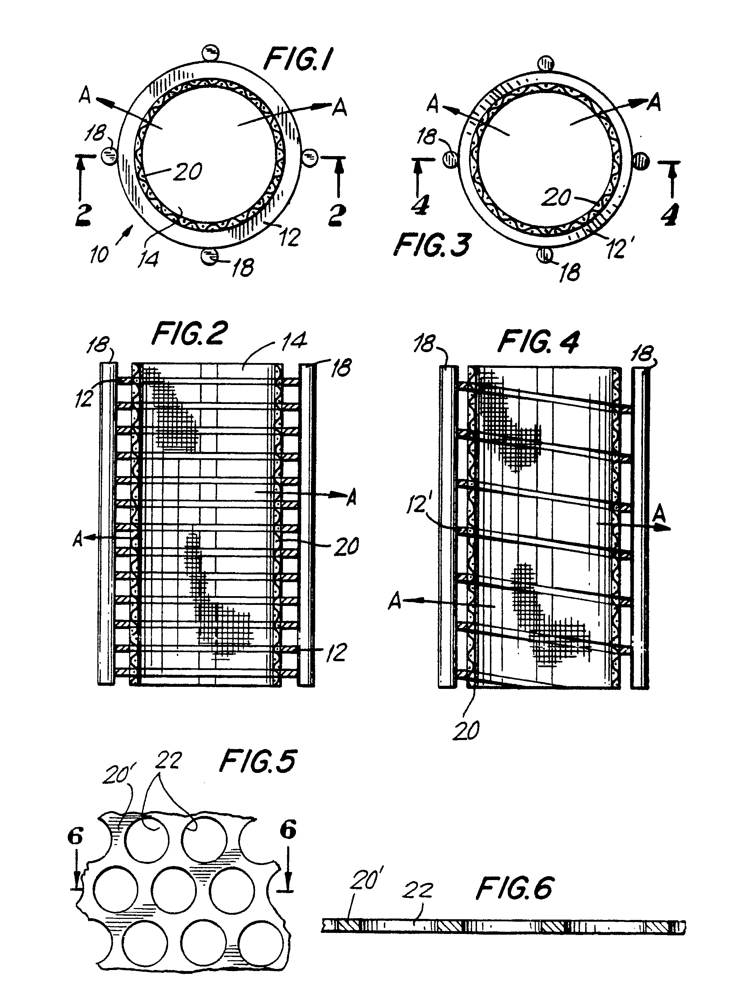

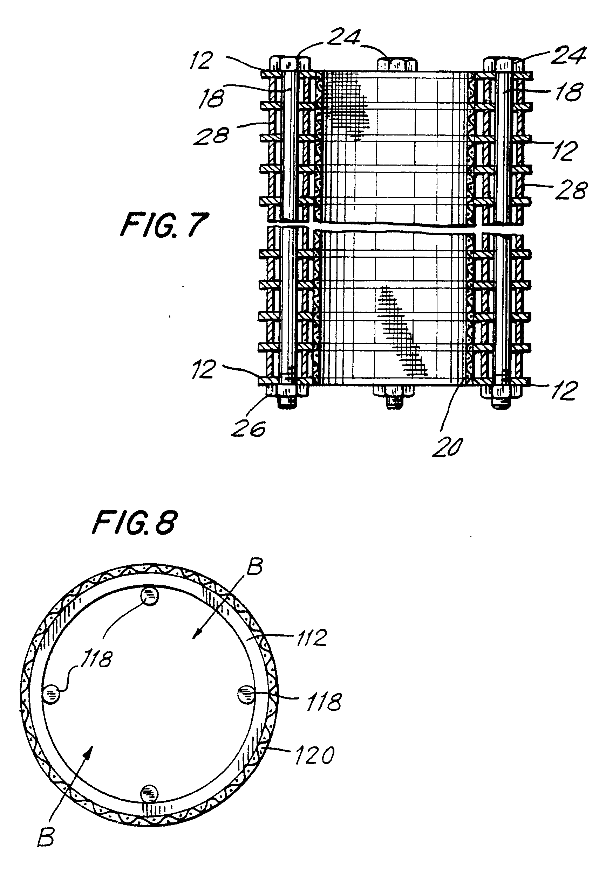

Referring now to Figures 1 and 2, a filter structure 10 constructed in accordance with this invention includes elongate support parts in the form of a plurality of ring-shaped members 12 aligned to form a substantially cylindrical space 14. The ring-shaped members are preferably made of a relatively flat material so that they extend radially outwardly from the cylindrical space 14. A plurality of spacing means in the form of axially extending rods 18 are disposed circumferentially around the ring shaped members 12 to maintain the axial distance and to position the rings. The ring-shaped members are made of a strong material such as a metal ribbon. The rods 18 are also preferably made of a metallic material and are secured to the ring shaped elements 12 by well-known means such as by welding. Alternatively, the rods 18 pass through holes made in the ring-shaped members and securing means are provided in the form of a head 24 at one end and a nut 26 screwed on the other end, as shown in Figure 7. In this configuration, the spacing between the ring-shaped elements is maintained by spacer cylinders 28 as shown.

The filter structure 10 also includes a filtering media 20 having a cylindrical shape and disposed inside ring-shaped members 12 for support. The media 20 has a plurality of interstices which allow a fluid to flow outwardly from space 14 as shown in the Figures by arrows A.

In the embodiment of Figures 1 and 2 the support parts are ring-shaped members 12 consisting of discrete or closed hoops. In Figures 3 and 4 a second type of filter structure is shown in which the support parts are actually loops or windings of a continuous, helical ribbon 12'.

The filtering media 20 may consists of a woven or non-woven material of paper, fabric, or it may be a metal mesh, depending on the pressure and volume of fluid, and the size of the particulate matter that has to be intercepted. Alternatively, a filtering material may be made in the form of metallic sheet 20' having a plurality of openings 22 as shown in Figures 5 and 6. This sheet may be made by the photolithographic methods used for generating electronic integrated circuits, whereby the openings can have dimensions smaller than a micrometer.

The structures shown in Figure 1-4 and 7 are suitable for filtering particulate material from a fluid flowing radially outwardly. Because the ring-shaped elements 12 are generally flat so that they extend radially outward, they can withstand large tensile forces generated during filtering by the pressure differential in the fluid. The filtering media disposed inside the rings can be easily removed for cleaning or replacement. Furthermore, because of the open structure presented by the rings and the rods, only a small number of the interstices in the filtering media are blocked so that the filtering structure is very efficient as compared to the prior art structure.

Figure 8 shows a third type of filter structure for filtering a fluid flowing radially inwardly, as indicated by arrows B. In this structure, the filter media 120 is disposed radially outwardly of the ring-shaped elements 112. Similarly, rods 118 are radially inwardly of the ring-shaped elements 112. In this configuration, the filter structure resists large compressive forces generated by the pressure differential of the fluid.

## Claims

1. A filter structure for removing particulate matter from a fluid flowing along a path, the structure comprising:
a hollow tubular support structure comprising a plurality of axially spaced circumferentially extending elongate support parts, and spacing means coupled to the support parts for maintaining the parts in preselected axially spaced positions; and
a filtering media supported by the support structure and extending over the spaces between the support parts.

2. A filter structure as claimed in claim 1, wherein the width measured radially of each portion of a support part is substantially greater than the depth measured axially of that portion.

3. A filter structure as claimed in claim 2, wherein each support part is substantially flat.

4. A filter structure as claimed in any one of claims 1 to 3, wherein each support part is a discrete ring shaped element.

5. A filter structure as claimed in any one of claims 1 to 3, wherein the support parts are integrally connected so as to form a helical coil.

6. A filter structure as claimed in any one of claims 1 to 5, wherein the filtering media is disposed radially inwards of the support structure.

7. A filter structure as claimed in any one of claims 1 to 5, wherein the filtering media is disposed radially outwards of the support structure.

8. A filter structure as claimed in any one of claims 1 to 7, wherein the spacing means comprises a plurality of substantially axially extending rods, the rods being circumferentially spaced around the support parts.

9. A filter structure as claimed in claim 8, wherein the rods are disposed radially inwards of the support parts.

10. A filter structure as claimed in claim 8, wherein the rods are disposed radially outwards of the support parts.

11. A filter structure as claimed in claim 8, wherein the rods extend through the support parts, the support structure further comprising spacers disposed between the support parts and securing means for securing together the spacers, rods and support parts.

12. A filter structure as claimed in any one of claims 1 to 11, wherein the filtering media consists of a woven material.

13. A filter structure as claimed in any one of claims 1 to 11, wherein the filtering media consists of a flat sheet having a plurality of minute openings.

FIG.I

FIG.3

FIG.2

FIG.4

FIG.5

FIG.6

FIG. 7

FIG. 8